# EUROPÄISCHE PATENTSCHRIFT

(11) **EP 1 064 639 B1**
(45) Veröffentlichungstag und Bekanntmachung des Hinweises auf die Patenterteilung: **31.07.2002**
(21) Anmeldenummer: 99913089.1
(22) Anmeldetag: 25.02.1999
(51) Int. Cl.: G09B 9/04, G09B 7/06, G09B 7/04

(54) **GERÄT ZUR WIEDERGABE VON INFORMATIONEN BZW. ZUR AUSFÜHRUNG VON FUNKTIONEN**
DEVICE FOR REPRODUCING INFORMATION OR EXECUTING FUNCTIONS
DISPOSITIF DE REPRODUCTION D'INFORMATION OU D'EXECUTION DE FONCTIONS

(30) Priorität: 18.03.1998 DE 19811832
(43) Veröffentlichungstag der Anmeldung: 03.01.2001
(73) Patentinhaber: SIEMENS AKTIENGESELLSCHAFT, 80333 München (DE)
(72) Erfinder: NIEDERMAIR, Gerhard, D-85256 Vierkirchen (DE); DE VOS, Luc, D-81541 München (DE); JACOB, Jürgen, D-80797 München (DE); NEUBAUER, Lucas, D-81539 München (DE)
(86) Internationale Anmeldenummer: DE9900511
(87) Internationale Veröffentlichungsnummer: WO9948075

(56) Entgegenhaltungen:
- DE-A- 19 617 129
- DE-A- 19 617 132
- US-A- 4 569 026

## Beschreibung

Die Erfindung bezieht sich auf ein Gerät zur Wiedergabe von Informationen bzw. zur Ausführung von Funktionen (siehe z.B. US 4569026), insbesondere zur bidirektionalen akustischen Kommunikation.

Bisher bekannte Geräte für Education- und/oder Entertainment Zwecke nützen zwar vielfach akustische Kommunikation jedoch nur in eine Richtung: so gibt ein Kasettengerät zwar akustische Informationen aus, die Steuerung des Kasettengerätes erfolgt jedoch über Tasten; tragbare Spielecomputer geben zwar akustische und/oder visuelle Informationen aus, werden aber ebenfalls durch die Eingabe von Tastaturbefehlen bedient.

Geräte mit akustischer Wiedergabe und auswechselbaren Speichermedien, die durch Spracheingabe steuerbar sind, konnten bislang aufgrund des großen dafür benötigten Speicherplatzbedarfs nicht realisiert werden.

Der Erfindung liegt daher die Aufgabe zugrunde, ein Gerät zur Wiedergabe von Informationen bzw. zur Ausführung von Funktionen anzugeben, das auf möglichst komfortable Art und Weise, die Wiedergabe von Informationen, die auf auswechselbaren Speichermedien gespeichert sind, ermöglicht.

Diese Aufgabe wird durch ein Gerät zur Wiedergabe von Informationen bzw. zur Ausführung von Funktionen mit Merkmalen nach Anspruch 1 gelöst. Weiterbildungen der Erfindung ergeben sich aus den Unteransprüchen.

Die Erfindung beruht demnach auf dem Gedanken, erste Daten, die die wiederzugebenden Informationen bzw. die auszuführenden Funktionen repräsentieren, und zweite Daten, die eine Spracherkennung unterstützen auf einem einzigen physikalischen Speichermdedium abzuspeichern, das durch einen Benutzer leicht ausgewechselt werden kann. Die zweiten Daten zur Unterstützung der Spracherkennung sind an eine Zielgruppe angepaßt, die für die ersten Daten spezifisch ist. Dadurch wird der Speicherplatzbedarf reduziert, und die Spracherkennung erleichtert. Auch durch die Wiedergabe der zur Verfügung stehenden zweiten Daten wird die Spracherkennung erleichtert.

Bei einer Weiterbildung der Erfindung werden in Abhängigkeit von den zuletzt ausgegebenen ersten Daten bestimmte zweite Daten ausgewählt und zur Unterstützung der Spracherkennung verwendet. Dadurch wird die Spracherkennung erleichtert.

Die Erfindung eignet sich insbesondere zum Einsatz in tragbaren Geräten, bei denen vorzugsweise Speichermedien wie Chipkarten Verwendung finden, die klein, leicht, robust gegen Erschütterungen sind und wenig Energie verbrauchen

Im folgenden wird die Erfindung anhand bevorzugter Ausführungsbeispiele näher beschrieben.

Zur Erläuterung der Ausführungsformen dient die nachstehende Figur:

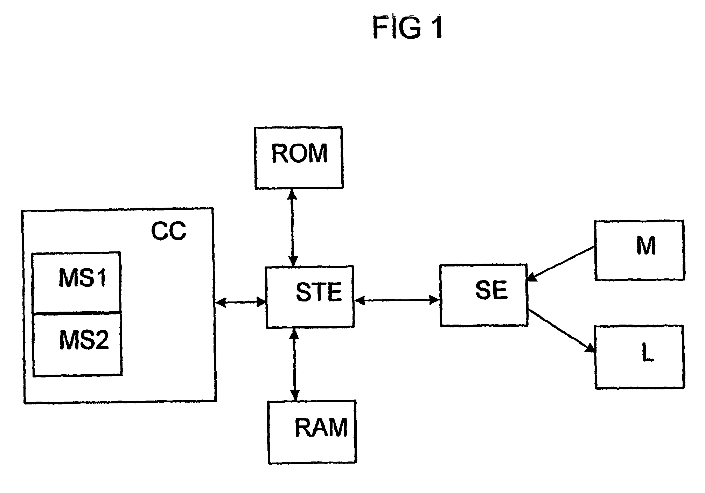

Figur 1 zeigt eine schematische Darstellung eines Gerätes zur Wiedergabe von Informationen bzw. zur Ausführung von Funktionen.

Das in Figur 1 dargestellte tragbare Gerät verfügt über eine Lautsprechereinrichtung L zur Ausgabe akustischer Informationen oder einen Monitor zur Ausgabe visueller Informationen oder andere technische Mittel, wie Steuereinrichtungen oder Prozessoren, die als Reaktion auf Informationen (erste Daten) eine Funktion auslösen oder durchführen können.

Außerdem enthält das Gerät ein Mikrofonelement M zur Aufnahme akustischer Signale, insbesondere gesprochener Sprache. Diese akustischen Signale werden von einem Sprachverarbeitungselement SE weiterverarbeitet, beispielsweise einer Analog/Digitalwandlung unterzogen, und zur Steuereinrichtung STE übermittelt. Die Steuereinrichtung STE und das Sprachverarbeitungselement SE konnen jeweils aus einem Mikrocontroler gebildet sein.

Das Gerät verfügt über zwei fest eingebaute Speichermittel: einen Lesespeicher ROM, in dem das Betriebssystem und weitere zur Steuerung der Steuereinrichtung STE zu verwendende Daten abgespeichert sein können und einen Schreib/Lesespeicher RAM, in dem während des Betriebs des Gerätes entstehende bzw. benötigte Daten zwischengespeichert werden. Die beiden Speichermittel ROM, RAM sind über ein Bussystem mit der Steuereinrichtung STE verbunden.

In das Gerät kann auswechselbar eine Chipkarte CC eingesteckt werden, die dann über ein Bussystem mit der Steuereinrichtung STE verbunden ist. Bei der Chipkarte CC handelt es sich vorzugsweise um einen Lesespeicher; die Erfindung ist jedoch nicht auf die Verwendung von Lesespeichern eingeschränkt, sondern umfaßt auch die Verwendung von Schreib/Lesespeichern. Auf der Chipkarte CC sind zwei unterschiedliche Arten von Daten abgespeichert: erste Daten, die die wiederzugebende Informationen bzw. die auszuführenden Funktionen repräsentieren, und zweite Daten, die Steuerinformationen zur Steuerung der Ausgabe der ersten Daten repräsentieren.

Im folgenden wird die Funktion des Gerätes anhand eines interaktiven Geschichtenerzählers exemplarisch beschrieben. Der Geschichtenerzähler liest beispielsweise einem Kind Geschichten vor, oder spielt Musik.

Die Sprach- und Musikdaten (erste Daten) dieser Geschichte, die auf der Chipkarte CC in digitaler und komprimierter Form gespeichert sind, werden durch die Steuereinrichtung STE dekomprimiert und in einem Sprachverarbeitungselement SE weiterverarbeitet, beispielsweise einer Digital/Analogwandlung unterzogen, und über den Lautsprecher L wiedergegeben.

An bestimmten vorgegebenen Stellen (Interaktionspunkten) wird der Ablauf unterbrochen. Das Gerät stellt dem Kind über sprachausgabe eine Frage nach dem weiteren Ablauf, indem es die an diesem Interaktionspunkt vorhandenen Möglichkeiten bzw. die den Möglichkeiten entsprechenden Steuerinformationen über den Lautsprecher ausgibt (Bsp: Apfel, Zwetschge oder Birne). Das Kind kann nun diese Frage beantworten, indem es eine Steuerinformation spricht (Bsp: Birne).

Per Spracherkennung wird der nächste durchzuführende Schritt erkannt. Die Spracherkennung wird dadurch erleichtert, daß alle möglichen nächsten durchzuführenden Schritte bzw. die entsprechenden Steuerinformationen ebenfalls auf der Chipkarte CC in digitaler und komprimierter Form abgespeichert sind.

Zur Spracherkennung werden die gesprochenen Steuerinformationen (Bsp: Birne) in einem Sprachverarbeitungselement SE analog/digital gewandelt und in der Steuereinrichtung STE mit den an diesem Interaktionspunkt zur Verfügung stehenden Steuerinformationen (zweiten Daten) verglichen. Diese Steuerinformationen (zweite Daten) werden zum Vergleich von der Chipkarte CC zur Steuereinrichtung STE übermittelt und gegebenenfalls dekomprimiert.

Die in digitale Daten umgewandelte gesprochene Steuerinformation wird mittels der Steuereinrichtung STE mit den zur Auswahl stehenden Steuerinformationen, die ebenfalls in digitaler Form vorliegen, verglichen und schließlich der Befehl ausgeführt, der der Steuerinformation entspricht, die der gesprochenen Steuerinformation am ähnlichsten ist. Darauf werden die diesem Befehl entsprechenden Daten von der Chipkarte CC gelesen, dekomprimiert, durch einene Verstärker verstärkt und über den Lautsprecher L ausgegeben, und so die Geschichte weitererzählt.

An jedem derartigen Interaktionspunkt wird also beispielsweise das bedienende Kind aufgefordert, aus einer Anzahl von Möglichkeiten auszuwählen. Die Auswahl einer Möglichkeit wird mittels einer Spracherkennung, die auf einem Vergleich mit den Auswahlmöglichkeiten basiert, durchgeführt. So wird das Kind durch die vorhandenen Möglichkeiten der Geschichte geführt, wobei das Kind selbst festlegt, welchen Weg durch die vorhandenen Geschichtsteile bzw. Musikstücke gewählt wird.

Die Bedienung des Gerätes findet also im wesentlichen akustisch statt. Das Gerät ist lediglich mit einer Ein/Austaste und einer Taste zur Regelung der Wiedergabelautstärke versehen.

Durch den Austausch der Chipkarte CC kann eine andere Geschichte erzählt werden, und die Geschichte mittels ebenfalls auf der Chipkarte CC gespeicherter Daten gesteuert werden.

Bei einer Weiterbildung der Erfindung werden die Kinderstimmen für den vorgesehenen Auswahlwortschatz sprecherunabhängig erkannt. Dies kann noch erleichtert werden, indem die gespeicherten Steuerinformationen (zweite Daten) an die Zielgruppe (Kinder, Landessprache) der ersten Daten (Geschichte) angepaßt sind. Die Spracherkennung wird also dadurch erleichtert oder zuverlässiger, daß die auf der Chipkarte CC abgespeicherten Steuerinformationen (zweite Daten) auf der Auswertung von gesprochenen Steuerinformationen basiert, wobei diese Steuerinformationen nur von einer repräsentativen Auswahl von Personen der Zielgruppe (Kindern) gesprochen wurden.

Bei einer Ausführungsvariante der Erfindung ist es auch möglich, anstatt akustische Informationen auszugeben, Funktionen auszuführen. Dabei sind viele unterschiedliche Funktionen denkbar: Anzeige von graphischen Symbolen auf einem Monitor, Ausführung von Spielefunktionen, Ausführung von Funktionen einer Menüstruktur, Ausführung von Funktionen zur Auslösung von Signalisierungsprozeduren zum Aufbau einer Kommunikationsverbindung und Durchführung von Funktionen zur Kommunikation mittels eines Mobilfunkendgerätes. So ist es beispielsweise möglich, eine Chipkarte CC für Mobilfunkendgeräte vorzusehen, auf der einerseits die Daten einer Menüstruktur zur Steuerung des Mobilfunkendgerätes abgespeichert sind, und andererseits Daten zur Unterstützung der Spracherkennung der Steuerung des Mobilfunkendgerätes.

## Patentansprüche

1. Gerät zur Wiedergabe von Informationen bzw. zur Ausführung von Funktionen, mit
a) Mitteln zur Spracherkennung (STE,SE),
b) Mitteln (STE) zur Steuerung des Gerätes durch gesprochene Steuerinformationen,
c) ersten Mitteln (MS1) zur Speicherung von ersten Daten, die die wiederzugebenden Informationen bzw. die auszuführenden Funktionen repräsentieren,
d) zweiten Mitteln (MS2) zur Speicherung von zweiten Daten, die die Steuerinformationen repräsentieren,
e) wobei die ersten und zweiten Mittel zur Speicherung auf demselben physikalischen Speichermedium (CC) realisiert sind, das durch einen Benutzer des Gerätes auswechselbar ist,
**dadurch gekennzeichnet, daß**
die zweiten Daten sprecherunabhängig an eine Zielgruppe angepaßt sind, die für die ersten Daten spezifisch ist.

2. Gerät nach Anspruch 1, bei dem
die zweiten Daten in Abhängigkeit von den zuletzt ausgegebenen ersten Daten selektiv zur Unterstützung der Spracherkennung verwendet werden.

3. Gerät nach einem der vorhergehenden Ansprüche, bei dem die ersten Daten Informationen über die zweiten Daten enthalten.

4. Gerät nach einem der vorhergehenden Ansprüche, bei dem die ersten und zweiten Mittel (MS1, MS2) zur Speicherung auf einer Chipkarte (CC) realisiert sind.

5. Gerät nach einem der vorhergehenden Ansprüche, bei dem die ersten und zweiten Mittel (MS1,MS2) zur Speicherung auf einer Chipkarte (CC) realisiert sind, von der Daten nur gelesen werden können.

6. Gerät nach einem der vorhergehenden Ansprüche, bei dem die ersten und zweiten Daten im wesentlichen akustische Informationen enthalten und das Gerät zur bidirektionalen akustischen Kommunikation verwendet wird.

7. Gerät nach einem der vorhergehenden Ansprüche, bei dem die ersten und/oder zweiten Daten in komprimierter Form auf dem Speichermedium (CC) abgespeichert sind, und bei Bedarf selektiv dekomprimiert werden.

## Claims

1. Device for reproducing information or executing functions, having
a) means for voice recognition (STE, SE),
b) means (STE) for controlling the device by spoken control information,
c) first means (MS1) for storing first data, which represent the information to be reproduced or the functions to be executed,
d) second means (MS2) for storing second data, which represent the control information,
e) the first and second means for storage being realized on the same physical storage medium (CC), which can be exchanged by a user of the device.

2. Device according to Claim 1, in which, depending on the first data last output, the second data are used selectively for assisting the voice recognition.

3. Device according to one of the preceding claims, in which the first data contain information on the second data.

4. Device according to one of the preceding claims, in which the first and second means (MS1, MS2) for storage are realized on a smart card (CC).

5. Device according to one of the preceding claims, in which the first and second means (MS1, MS2) for storage are realized on a smart card (CC) from which data can only be read.

6. Device according to one of the preceding claims, in which the first and second data essentially contain acoustic information and the device is used for bidirectional acoustic communication.

7. Device according to one of the preceding claims, in which the first and/or second data are stored in a compressed form on the storage medium (CC), and if need be are selectively decompressed.

## Revendications

1. Appareil de reproduction d'informations ou d'exécution de fonctions, comportant
a) des moyens de reconnaissance vocale (STE, SE),
b) des moyens (STE) de commande de l'appareil par des informations de commande vocales,
c) des premiers moyens (MS1) pour conserver des premières données qui représentent les informations à reproduire ou les fonctions à exécuter,
d) des deuxièmes moyens (MS2) pour conserver des deuxièmes données qui représentent les informations de commande,
e) les premiers et les deuxièmes moyens de mémoire étant réalisés sur le même support physique de mémoire (CC) qui peut être échangé par un utilisateur de l'appareil,
**caractérisé en ce que**
les deuxièmes données sont adaptées indépendamment du locuteur à un groupe - cible qui est spécifique aux premières données.

2. Appareil selon la revendication 1, dans lequel les deuxièmes données sont utilisées sélectivement pour soutenir la reconnaissance vocale en fonction des premières données délivrées en dernier lieu.

3. Appareil selon l'une des revendications précédentes, dans lequel les premières données contiennent des informations concernant les deuxièmes données.

4. Appareil selon l'une des revendications précédentes, dans lequel les premiers et les deuxièmes moyens (MS1, MS2) de mémoire sont réalisés sur une carte à puce (CC).

5. Appareil selon l'une des revendications précédentes, dans lequel les premiers et les deuxièmes moyens de mémoire (MS1, MS2) sont réalisés sur une carte à puce (CC) sur laquelle les données peuvent uniquernent être lues.

6. Appareil selon l'une des revendications précédentes, dans lequel les premières et les deuxièmes données contiennent essentiellement des informations acoustiques, l'appareil étant utilisé pour une communication acoustique bidirectionnelle.

7. Appareil selon l'une des revendications précédentes, dans lequel les premières et/ou les deuxièmes données sont conservées sous forme comprimée sur le support de mémoire (CC) et sont décomprimées sélectivement en fonction des besoins.
